# EUROPÄISCHE PATENTSCHRIFT

(11) **EP 0 545 060 B1**
(45) Veröffentlichungstag und Bekanntmachung des Hinweises auf die Patenterteilung: **26.04.1995**
(21) Anmeldenummer: 92118208.5
(22) Anmeldetag: 23.10.1992
(51) Int. Cl.: H02K 21/14, H02K 1/27

(54) **Elektrische Maschine mit einem permanentmagneterregten Läufer**
Electric machine with a rotor excited by permanent magnets
Machine électrique avec un rotor excité par aimants permanents

(30) Priorität: 07.11.1991 DE 4136691
(43) Veröffentlichungstag der Anmeldung: 09.06.1993
(73) Patentinhaber: SIEMENS AKTIENGESELLSCHAFT, 80333 München (DE)
(72) Erfinder: Brandes, Jürgen, Dr., W-8740 Bad Neustadt/S (DE)

(56) Entgegenhaltungen:
- EP-A- 0 295 718
- EP-A- 0 307 706
- DE-U- 8 816 122
- GB-A- 2 026 253
- PATENT ABSTRACTS OF JAPAN, Bd. 014, Nr. 496 (E-996), 29. Oktober 1990; & JP-A-22 06 343

## Beschreibung

Die Erfindung betrifft eine elektrische Maschine mit einem permanentmagneterregten Läufer, an dessen Umfang je Läuferpol mehrere direkt am Luftspalt zum Ständer der Maschine liegende, platten- oder streifenförmige Permanentmagnete angeordnet sind.

Eine elektrische Maschine mit einem solchen permanentmagneterregten Läufer ist durch das DE-U-80 18 686 bekannt.

Die bei derartigen Läufern verwendeten Permanentmagnete werden aus fertigungstechnischen und Kostengründen als flache geradlinige Platten oder Streifen ausgebildet. Werden bei einem Läufer je Läuferpol mehrere Permanentmagnete nebeneinander am Läuferumfang angeordnet, dann ergeben sich durch die endlichen Spalten zwischen den einzelnen benachbarten Magneten Unregelmäßigkeiten im magnetischen Feld der einzelnen Läuferpole. Diese Unregelmäßigkeiten sind Ursache für Oberwellenfelder, durch die wiederum im Zusammenwirken mit Ständerwicklungs- und Ständernutungsfeldern Pendelmomente hervorgerufen werden können.

Der Erfindung liegt die Aufgabe zugrunde, eine elektrische Maschine mit einem permanentmagneterregten Läufer so auszubilden, daß Pendelmomente aus dem Zusammenwirken von Ständer- und Läuferoberwellenfeldern weitgehend vermieden werden.

Die Lösung der gestellten Aufgabe gelingt nach der Erfindung dadurch, daß die Gesamtzahl der am Läufer angeordneten Permanentmagnete einer Zahl entspricht, die weder durch die Ständernutzahl N noch durch die Polzahl p der Maschine ganzzahlig teilbar ist. Am günstigsten ist es, wenn die Gesamtzahl der Permanentmagnete eine Primzahl größer drei ist. Aufgrund dieser Maßnahme wird das die Pendelmomente hervorrufende Zusammenwirken der auf der Unterteilung der Permanentmagnete je Läuferpol beruhenden Oberwellenfelder mit den durch die Ständernutung verursachten Oberwellenfelder unterbunden.

Vorteilhaft ist es ferner, die magnetische Längsachse der Läuferpole und/oder die Ständernuten in bezug zur Längsachse des Läufers zu schrägen. Hierdurch wird die Größe der Pendelmomente reduziert, die aus dem Zusammenwirken der Ständernutungsfelder und der Permanentmagnetober felder resultieren. Eine Schrägung der magnetischen Längsachse der Läuferpole läßt sich fertigungstechnisch einfacher erreichen als eine Schrägung der Ständernuten, so daß es besonders zweckmäßig ist, nur eine Schrägung dieser magnetischen Längsachse vorzunehmen. Gute Ergebnisse werden bei einer Schrägung um eine Nutteilung erzielt. Schrägung um eine Nutteilung bedeutet, daß die Lage der magnetischen Längsachse auf der einen Stirnseite des Läufers gegenüber der Lage auf der anderen Stirnseite des Läufers um den Mittenabstand zweier benachbarter Nuten des Ständers in Umfangsrichtung verschoben ist.

Anhand eines in der Zeichnung dargestellten Ausführungsbeispieles wird die Erfindung nachfolgend näher beschrieben. Es zeigt:
- FIG 1: eine elektrische Maschine im Querschnitt,
- FIG 2: eine perspektivische Ansicht eines mit Permanentmagneten bestückten Läufers.

Mit 1 ist der Ständer einer elektrischen Maschine bezeichnet, in dessen Ständernuten 2 die Ständerwicklung 3 der Maschine angeordnet ist. In der Ständerbohrung 4 des Ständers 1 ist ein drehbar gelagerter Läufer 5 eingesetzt.

Der Läufer 5 besteht aus einer Welle 6, auf der ein Läuferblechpaket 7 sitzt, das an seinem Außenumfang mit streifenförmigen Permanentmagneten 8 bestückt ist. Bei der Bestückung des Läufers ist auf eine gleichmäßige Verteilung der Permanentmagnete am Läuferumfang zu achten. Die Anzahl der am Umfang des Läuferblechpaketes 7 vorgesehenen Permanentmagnete 8 entspricht einer Primzahl. Beim dargestellten Ausführungsbeispiel sind 31 Permanentmagnete 8 am Läuferumfang angeordnet.

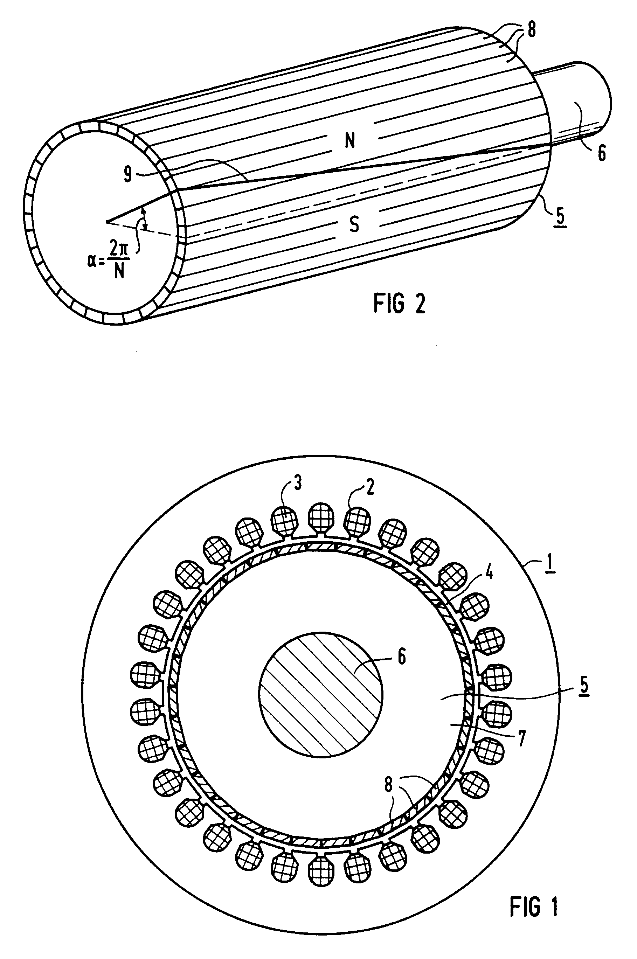

Die Permanentmagnete 8 werden derart aufmagnetisiert, daß mehrere räumlich nebeneinanderliegende Permanentmagnete 8 jeweils einen Läuferpol (Nordpol bzw. Südpol) bilden. Dabei erfolgt die Aufmagnetisierung ferner in der Weise, daß der Übergang von einer Polarität zur anderen entlang einer schräg verlaufenden Linie 9 (FIG 2) erfolgt. Damit liegt eine Schrägung der magnetischen Längsachse der Läuferpole N,S gegenüber der Längsachse des Läufers 5 bzw. gegenüber den zur Längsachse des Läufers 5 parallel verlaufenden Ständernuten vor. Die Schrägung erfolgt vorzugsweise um einen Winkel α = 2π/N, wobei N die Anzahl der Nuten im Ständer ist.

Bei einer solchen elektrischen Maschine können alle Ständernuten bewickelt werden, wobei sich für alle Spulen der Ständerwicklung eine gleiche Spulenweite ergibt. Außerdem ist der Läufer über seinen gesamten Umfang gleichmäßig mit Permanentmagnetmaterial bedeckt, so daß Unwuchten vermieden werden. Jeder Läuferpol ist somit über seine volle Polbreite mit Magnetmaterial bedeckt.

## Patentansprüche

1. Elektrische Maschine mit einem permanentmagneterregten Läufer, an dessen Umfang je Läuferpol (N,S) mehrere direkt am Luftspalt zum Ständer (1) der Maschine liegende, platten- oder streifenförmige Permanentmagnete (8) angeordnet sind, **dadurch gekennzeichnet,** daß die Gesamtzahl der am Läufer (5) angeordneten Permanentmagnete (8) einer Zahl Z entspricht, die weder durch die Ständernutzahl N noch durch die Polzahl p der Maschine ganzzahlig teilbar ist.

2. Elektische Maschine nach Anspruch 1,
**dadurch gekennzeichnet,**
daß die Gesamtzahl der am Läufer (5) angeordneten Permanentmagnete (8) einer Primzahl größer drei entspricht.

3. Elektische Maschine nach Anspruch 1 oder 2,
**dadurch gekennzeichnet,**
daß die magnetische Längsachse der Läuferpole (N,S) und/oder die Ständernuten der Maschine in bezug zur Längsachse des Läufers (5) geschrägt sind.

4. Elektrische Maschine nach Anspruch 3,
**dadurch gekennzeichnet**,
daß die magnetische Längsachse der Läuferpole (N,S) um eine Nutteilung gegenüber der Längsachse geschrägt ist.

## Claims

1. Electrical machine with a rotor excited by permanent magnets, on the circumference of which rotor per rotor pole (N, S) are arranged several plate-shaped or strip-shaped permanent magnets (8) lying directly on the air gap to the stator (1) of the machine, characterized in that the total number of permanent magnets (8) arranged on the rotor (5) corresponds to a number Z which cannot be divided integrally either by the stator slot number N or by the pole number p of the machine.

2. Electrical machine according to claim 1, characterized in that the total number of permanent magnets (8) arranged on the rotor (5) corresponds to a prime number greater than three.

3. Electrical machine according to claim 1 or 2, characterized in that the magnetic longitudinal axis of the rotor poles (N, S) and/or the stator slots of the machine are slanted in relation to the longitudinal axis of the rotor (5).

4. Electrical machine according to claim 3, characterized in that the magnetic longitudinal axis of the rotor poles (N, S) is slanted about a slot pitch relative to the longitudinal axis.

## Revendications

1. Machine électrique comportant un rotor excité par des aimants permanents et sur la périphérie duquel sont disposés, pour chaque pôle (N,S) du rotor, plusieurs aimants permanents en forme de plaques ou de bandes (8), qui sont situés directement devant l'entrefer par rapport au stator (1) de la machine, caractérisée par le fait que le nombre total des aimants permanents (8) disposés sur le rotor (5) correspond à un nombre (Z) qui n'est divisible, selon une division entière, ni par le nombre N des encoches statoriques, ni par le nombre de pôles p de la machine.

2. Machine électrique suivant la revendication 1, caractérisée par le fait que le nombre total des aimants permanents (8) disposés sur le rotor (5) correspond à un nombre premier supérieur à trois.

3. Machine électrique suivant la revendication 1 ou 2, caractérisée par le fait que l'axe magnétique longitudinal des pôles (N,S) du rotor et/ou les encoches statoriques de la machine sont obliques par rapport à l'axe longitudinal du rotor (5).

4. Machine électrique suivant la revendication 3, caractérisée par le fait que l'axe magnétique longitudinal des pôles (N,S) du rotor est biseauté et ce sur un pas de répartition des encoches par rapport à l'axe longitudinal.
